# EUROPEAN PATENT SPECIFICATION

(11) **EP 3 733 766 B1**
(45) Date of publication and mention of the grant of the patent: **29.01.2025**
(21) Application number: 18897810.0
(22) Date of filing: 30.11.2018
(51) Int. Cl.: C08L 29/04, B32B 27/28, B65D 65/02, B65D 65/40, C08K 5/09, C08K 5/315, B29B 9/12

(54) **RESIN COMPOSITION INCLUDING ETHYLENE/VINYL ALCOHOL COPOLYMER, AND MOLDED OBJECT AND PACKAGING MATERIAL BOTH COMPRISING SAME**
HARZZUSAMMENSETZUNG MIT ETHYLEN/VINYLALKOHOL-COPOLYMER UND SOWOHL FORMOBJEKT ALS AUCH VERPACKUNGSMATERIAL DAMIT
COMPOSITION DE RÉSINE COMPRENANT UN COPOLYMÈRE D'ÉTHYLÈNE/ALCOOL VINYLIQUE ET OBJET MOULÉ ET MATÉRIAU D'EMBALLAGE LA COMPRENANT TOUS DEUX

(30) Priority: 27.12.2017 JP 2017250575
(43) Date of publication of application: 04.11.2020
(73) Proprietor: Kuraray Co., Ltd., Kurashiki-shi, Okayama 710-0801 (JP)
(72) Inventor: YOSHIDA, Kentaro, Kurashiki-shi, Okayama 713-8550 (JP)
(74) Representative: Müller-Boré & Partner Patentanwälte PartG mbB
(86) International application number: PCT/JP2018/044240
(87) International publication number: WO 2019/130989

(56) References cited:
- EP-A1- 2 551 300
- EP-A1- 2 730 614
- EP-A2- 1 108 744
- WO-A1-2011/118648
- WO-A1-2017/047806
- JP-A- 2001 234 007
- JP-A- 2002 060 413
- JP-A- 2011 202 052
- JP-A- 2012 207 054

## Description

### TECHNICAL FIELD

The present invention relates to a resin composition containing an ethylene-vinyl alcohol copolymer as a main component and to a shaped article and a packaging material using the resin composition.

### BACKGROUND ART

Ethylene-vinyl alcohol copolymers (hereinafter, referred to as "EVOHs") are excellent in gas barrier properties and melt moldability and are thus molded into films, sheets, pipes, tubes and bottles by various melt molding methods to be widely used as packaging materials expected to have gas barrier properties in the fields of foods and industries. In recent years, high-speed melt moldability at higher temperatures than in the past is desired to improve productivity. Such melt molding at high temperatures, however, has a problem of defects, such as voids derived from low molecular weight volatile components present in the resin or produced by decomposition of the resin. In particular, voids are likely to be produced at film edges during film production at high temperatures and are thus one of the causes of a decrease in productivity.

To improve the above problems, the EVOH resin composition is controlled to have a low moisture content. The EVOH resin composition is also controlled to contain no more than a certain amount of alkaline earth metal ions. For example, Patent Document 1 describes that the EVOH resin composition preferably has a moisture content of 1.0% or less to prevent molding troubles including voids produced during melt molding and preferably contains 60 µmol/g or less of alkaline earth metal ions to inhibit excessive decomposition during melt molding. However, expectations for the quality of such a packaging material are increasingly strict and further improvement is desired particularly in the quality of flexible packaging materials in the food field. Patent Document 2 describes a resin composition, process for production thereof, and multilayer structure. Patent Document 3 describes an ethylene-vinyl alcohol copolymer resin composition and method for producing same. Patent Document 4 describes a modified ethylene-vinyl alcohol copolymer, and composition containing the same. Patent Document 5 describes a heat-shrinkable film.

### PRIOR ART DOCUMENT

### PATENT DOCUMENT

Patent Document 1: WO 2017/047806
Patent Document 2: EP 2 551 300 A1
Patent Document 3: EP 2 730 614A1
Patent Document 4: JP 2011/202052 A
Patent Document 5:JP 2012/207054 A

### SUMMARY OF THE INVENTION

### PROBLEMS TO BE SOLVED BY THE INVENTION

The present invention has been made in view of the above circumstances, and it is an object thereof to provide a resin composition that is capable of inhibiting production of voids even during melt molding at high temperatures and preferably used for high-speed melt molding process at high temperatures.

### MEANS FOR SOLVING THE PROBLEMS

The present inventors have been studied intensively to solve the above problems, and as a result, they have found that a resin composition containing an EVOH produced using an azonitrile polymerization initiator is capable of inhibiting production of voids during melt molding at high temperatures when an amount of nitrogen element derived from the polymerization initiator falls within a specific range and a ratio of amounts of nitrogen element before and after a reprecipitation operation falls within a specific range and thus have come to complete the present invention. The above problems are solved by the present invention that provides a

resin composition comprising an ethylene-vinyl alcohol copolymer (A) as a main component, the copolymer (A) being produced using an azonitrile polymerization initiator, wherein
the ethylene-vinyl alcohol copolymer (A) has an ethylene unit content from 20 to 60 mol% and a degree of saponification of 85 mol% or more,
the ethylene-vinyl alcohol copolymer (A) consists of copolymerized units of ethylene, vinyl acetate and vinyl alcohol an amount (NI) of nitrogen element derived from the polymerization initiator is from 5 to 60 ppm, and
a ratio (NF/NI) of an amount (NF) of nitrogen element contained in a dried solid obtained by an operation (X) below to the amount (NI) of nitrogen element is from 0.65 to 0.99.
Operation (X): a solution of 5 g of the resin composition dissolved in 100 g of 1,1,1,3,3,3-hexafluoro-2-propanol is dropped in 1000 g of methanol under stirring and a precipitation thus produced is separated and then dried to obtain the dried solid,
wherein the amount (NI) of nitrogen elements and the amount (NF) of nitrogen elements are determined according to the method disclosed in the experimental part herein below.

The invention also provides a shaped article comprising the resin composition and a packaging material comprising the shaped article.

### EFFECTS OF THE INVENTION

The resin composition of the present invention is capable of inhibiting production of voids even during melt molding at high temperatures and is 2. preferably used for high-speed melt molding process at high temperatures. It is also possible to economically provide the resin composition of the present invention to be used for production of various packaging materials.

### MODES FOR CARRYING OUT THE INVENTION

Embodiments of the present invention are described below while the present invention is not limited to them. One type of materials described as examples may be used singly or two or more types of them may be used together.

### (Resin Composition)

A resin composition of the present invention comprises an ethylene-vinyl alcohol copolymer (A) as a main component, the copolymer (A) being produced using an azonitrile polymerization initiator (hereinafter, may be abbreviated as an EVOH (A)). In the resin composition, an amount (NI) of nitrogen element derived from the polymerization initiator has to be from 5 to 60 ppm and a ratio (NF/NI) of an amount (NF) of nitrogen element contained in a dried solid obtained by an operation (X) below to the amount (NI) of nitrogen element has to be from 0.65 to 0.99.

Operation (X): a solution of 5 g of the resin composition dissolved in 100 g of 1,1,1,3,3,3-hexafluoro-2-propanol is dropped in 1000 g of methanol under stirring and a precipitation thus produced is separated and then dried to obtain the dried solid.

The amount (NI) of nitrogen element and the amount (NF) of nitrogen element satisfying the above conditions cause, in addition to inhibition of void production even during melt molding at high temperatures, improvement in coloration resistance of a shaped article to be produced. Although the reason is not certain, it is assumed to be because the amount of low molecular weight components derived from the polymerization initiator is reduced and also because thermal decomposition of the resin composition by the end structure and the low molecular weight components derived from the polymerization initiator is inhibited. Meanwhile, an extremely trace amount of the low molecular weight components derived from the polymerization initiator may improve long term melt processing stability of the resin composition. It is difficult to economically reduce NI to less than 5 ppm because the polymerization concentration has to be reduced and the polymerization time has to be extended. The ratio (NF/NI) preferably ranges from 0.75 to 0.95. The amount of nitrogen element can be determined by a trace total nitrogen analyzer. When the resin composition and the dried solid contain nitrogen elements derived from a component other than the polymerization initiator, the amount of the nitrogen element derived from that component is separately determined and subtracted from the amount measured by the trace total nitrogen analyzer to calculate a net amount of nitrogen element derived from the polymerization initiator.

### (EVOH (A))

The EVOH (A) is a main component of the resin composition of the present invention. The EVOH (A) is a copolymer having ethylene units and vinyl alcohol units as main structural units. The EVOH (A) also contains vinyl ester units, wherein the vinyl ester units are vinyl acetate units. The EVOH (A) is generally obtained by polymerizing ethylene and vinyl ester and saponifying an ethylene-vinyl ester copolymer thus obtained. That is, according to the claimed invention, the ethylene-vinyl alcohol copolymer (A) consists of copolymerized units of ethylene, vinyl acetate and vinyl alcohol.

The EVOH (A) has to have an ethylene unit content (i.e., a ratio of the number of ethylene units to the total number of monomer units in the EVOH (A)) from 20 to 60 mol%. The lower limit of the ethylene unit content in the EVOH (A) is preferably 22 mol% and more preferably 24 mol%. Meanwhile, the upper limit of the ethylene unit content in the EVOH (A) is preferably 55 mol% and more preferably 50 mol%. If the ethylene unit content in the EVOH (A) is less than 20 mol%, the gas barrier properties under high humidity decrease and the melt moldability may also be deteriorated. In contrast, if the ethylene unit content in the EVOH (A) is more than 60 mol%, gas barrier properties may be insufficient.

The EVOH (A) has to have a degree of saponification (i.e., a ratio of the number of vinyl alcohol units to the total number of vinyl alcohol units and vinyl ester units in the EVOH (A)) of 85 mol% or more. The lower limit of the degree of saponification of the EVOH (A) is preferably 95 mol% and more preferably 99 mol%. Meanwhile, the upper limit of the degree of saponification of the EVOH (A) is preferably 100 mol% and more preferably 99.99 mol%. If the EVOH (A) has a degree of saponification of less than 85 mol%, gas barrier properties may be insufficient and there is also a risk of causing insufficient thermal stability.

When the EVOH (A) is a mixture of two or more types of EVOH with different ethylene unit contents, an average calculated from the mixing mass ratio is defined as the ethylene unit content in the EVOH (A). In this case, the difference in the ethylene unit content between the EVOHs with the most different ethylene unit contents is preferably 30 mol% or less. The difference in the ethylene unit content is more preferably 20 mol% or less and even more preferably 15 mol% or less. Similarly, when the EVOH (A) is a mixture of two or more types of EVOH with different degrees of saponification, an average calculated from the mixing mass ratio is defined as the degree of saponification of the EVOH (A). In this case, the difference in the degree of saponification of the EVOHs with the most different degrees is preferably 7% or less and more preferably 5% or less. When the resin composition containing the EVOH (A) is expected to have a higher balance between heat moldability and gas barrier properties, an EVOH may be used as the EVOH (A) that contains an EVOH (A-1) with an ethylene unit content of 24 mol% or more and less than 34 mol% and a degree of saponification of 99 mol% or more and an EVOH (A-2) with an ethylene unit content of 34 mol% or more and less than 50 mol% and a degree of saponification of 99 mol% or more, in which a mass ratio (A-1/A-2) of the EVOH (A-1) to the EVOH (A-2) is from 60/40 to 90/10. The ethylene unit content and the degree of saponification of the EVOH (A) can be obtained by nuclear magnetic resonance (NMR).

The EVOH (A) has a melt flow rate (hereinafter, may be simply referred to as an "MFR"; a temperature of 210°C and a load of 2160 g) in accordance with JIS K 7210: 2014 with a lower limit of generally 0.1 g/10 min. and an upper limit of generally 50 g/10 min.

The resin composition containing the EVOH (A) as a main component herein means that the content of the EVOH (A) in the resin composition is 70 mass% or more, preferably 80 mass% or more, and more preferably 90 mass% or more. The EVOH (A) contained in the resin composition as a main component improves the melt moldability of the resin composition to be obtained and causes excellent gas barrier properties, oil resistance, and the like of a shaped article to be produced from that.

### (Metal Ions (B))

The resin composition of the present invention preferably further contains metal ions (B). The resin composition of the present invention containing the metal ions (B) exhibits excellent interlayer adhesion when produced into a multilayer structure. Although the reason why the metal ions (B) improve the interlayer adhesion is not clear, it is considered that, when molecules contained in a layer adjacent to the EVOH (A) have functional groups capable of reacting with the hydroxy groups in the EVOH (A), the bonding reaction is accelerated by the metal ions (B). In addition, control of the content ratio to carboxylic acid (C) described later improves the melt moldability and the coloration resistance of the resin composition to be obtained.

The lower limit of the content of the metal ions (B) in the resin composition is preferably 100 ppm and more preferably 150 ppm. Meanwhile, the upper limit of the content of the metal ions (B) in the resin composition is preferably 400 ppm and more preferably 350 ppm. If the content of the metal ions (B) in the resin composition is less than 100 ppm, the interlayer adhesion of the multilayer structure to be produced may be insufficient. In contrast, if the content of the metal ions (B) in the resin composition is more than 400 ppm, coloration resistance may be insufficient.

Examples of the metal ions (B) may include alkali metal ions, alkaline earth metal ions, and transition metal ions, and they may include one or multiple types. Among all, it is preferred that the metal ions (B) contain alkali metal ions. From the perspective of simplified production of the resin composition and further improvement in the interlayer adhesion of the multilayer structure, it is more preferred that the metal ions (B) consist only of alkali metal ions.

Examples of the alkali metal ions may include ions of lithium, sodium, potassium, rubidium, and cesium, and from the perspective of industrial availability, ions of sodium or potassium are preferred.

Examples of alkali metal salt to provide the alkali metal ions may include salts of aliphatic carboxylic acid, salts of aromatic carboxylic acid, salts of carbonic acid, salts of hydrochloric acid, salts of nitric acid, salts of sulfuric acid, salts of phosphoric acid, and metal complexes of lithium, sodium, and potassium. Among all, sodium acetate, potassium acetate, sodium phosphate, and potassium phosphate are more preferred from the perspective of availability.

It is sometimes preferred that the metal ions (B) contain alkaline earth metal ions. The metal ions (B) containing alkaline earth metal ions inhibit thermal degradation of the EVOH (A) when trimmed portions are reused and may inhibit generation of gels and hard spots in the shaped article to be produced.

Examples of the alkaline earth metal ions may include ions of beryllium, magnesium, calcium, strontium, and barium, and from the perspective of industrial availability, ions of magnesium or calcium are preferred.

Examples of alkaline earth metal salt to provide the alkaline earth metal ions may include salts of aliphatic carboxylic acid, salts of aromatic carboxylic acid, salts of carbonic acid, salts of hydrochloric acid, salts of nitric acid, salts of sulfuric acid, salts of phosphoric acid, and metal complexes of magnesium and calcium.

### (Carboxylic Acid (C))

The resin composition of the present invention preferably further contains carboxylic acid (C). The resin composition of the present invention containing the carboxylic acid (C) is capable of improving the melt moldability and the coloration resistance at high temperatures of the resin composition to be obtained. In particular, from the perspective of the possibility of an increase in pH buffer capacity of the resin composition to be obtained to improve coloration resistance to acidic substances and basic substances, the carboxylic acid (C) more preferably has a pKa ranging from 3.5 to 5.5.

The lower limit of the content of the carboxylic acid (C) in the resin composition is preferably 50 ppm and more preferably 100 ppm. Meanwhile, the upper limit of the content of the carboxylic acid (C) in the resin composition is preferably 400 ppm and more preferably 350 ppm. If the content of the carboxylic acid (C) in the resin composition is less than 50 ppm, the coloration resistance at high temperatures may be insufficient. In contrast, if the content of the carboxylic acid (C) in the resin composition is more than 400 ppm, the melt moldability may be insufficient or a problem of odor may occur. In this context, the content of carboxylic acid salts is not considered as the content of the carboxylic acid (C) in the resin composition.

Examples of the carboxylic acid (C) may include monovalent and polyvalent carboxylic acids and they may include one or multiple types. When both monovalent and polyvalent carboxylic acids are contained as the carboxylic acid (C), the melt moldability and the coloration resistance at high temperatures of the resin composition to be obtained may be particularly improved. The polyvalent carboxylic acid may have three or more carboxyl groups. In this case, the coloration resistance of the resin composition of the present invention may be more effectively improved.

The monovalent carboxylic acid is a compound having one carboxyl group in the molecule. The monovalent carboxylic acid preferably has a pKa ranging from 3.5 to 5.5. Examples of such carboxylic acid may include formic acid (pKa = 3.77), acetic acid (pKa = 4.76), propionic acid (pKa = 4.85), butyric acid (pKa = 4.82), caproic acid (pKa = 4.88), capric acid (pKa = 4.90), lactic acid (pKa = 3.86), acrylic acid (pKa = 4.25), methacrylic acid (pKa = 4.65), benzoic acid (pKa = 4.20), 2-naphthoic acid (pKa = 4.17), and the like. These carboxylic acids may have a substituent, such as a hydroxyl group, an amino group, and a halogen atom. Among all, acetic acid is preferred because of the high level of safety and the ease of handling.

The polyvalent carboxylic acid is a compound having two or more carboxyl groups in the molecule. In this case, the polyvalent carboxylic acid is preferred that has at least one carboxyl group with a pKa ranging from 3.5 to 5.5. Examples of such polyvalent carboxylic acid may include oxalic acid (pKa₂ = 4.27), succinic acid (pKa₁ = 4.20), fumaric acid (pKa₂ = 4.44), malic acid (pKa₂ = 5.13), glutaric acid (pKa₁ = 4.30, pKa₂ = 5.40), adipic acid (pKa₁ = 4.43, pKa₂ = 5.41), pimelic acid (pKa₁ = 4.71), phthalic acid (pKa₂ = 5.41), isophthalic acid (pKa₂ = 4.46), terephthalic acid (pKa₁ = 3.51, pKa₂ = 4.82), citric acid (pKa₂ = 4.75), tartaric acid (pKa₂ = 4.40), glutamic acid (pKa₂ = 4.07), and aspartic acid (pKa = 3.90).

### (Other Components)

The resin composition of the present invention may contain other components as long as not impairing the effects of the present invention. Examples of such other components may include phosphoric acid compounds, boron compounds, thermoplastic resins other than the EVOH (A), crosslinkers, desiccants, prooxidants, antioxidants, oxygen absorbents, plasticizers, lubricants, thermal stabilizers (melting stabilizers), processing aids, surfactants, deodorants, antistatics, ultraviolet absorbers, antifog agents, flame retardants, pigments, dyes, fillers, reinforcing agents such as various types of fiber.

### (Phosphoric Acid Compound)

When such a phosphoric acid compound is contained, the lower limit of the content in the resin composition is preferably 1 ppm in terms of phosphate radicals and more preferably 10 ppm. Meanwhile, the upper limit of the content in the resin composition is preferably 200 ppm in terms of phosphate radicals and more preferably 100 ppm. The phosphoric acid compound contained in this range improves the thermal stability of the resin composition. In particular, generation of gelatinous hard spots and coloration during long term melt molding may be inhibited.

As the phosphoric acid compound, it is possible to use various acids, such as phosphoric acid and phosphorous acid, salts thereof, and the like. The salt of phosphoric acid may be in any form of primary phosphate, secondary phosphate, and tertiary phosphate. Cationic species of the salt of phosphoric acid is preferably, but not particularly limited to, alkali metal or alkaline earth metal. Among all, the phosphoric acid compound is preferably added in the form of sodium dihydrogen phosphate, potassium dihydrogen phosphate, disodium hydrogen phosphate, or dipotassium hydrogen phosphate.

### (Boron Compound)

When such a boron compound is contained, the lower limit of the content in the resin composition is preferably 5 ppm in terms of boron elements and more preferably 10 ppm. Meanwhile, the upper limit of the content in the resin composition is preferably 1,000 ppm in terms of boron elements and more preferably 500 ppm. The boron compound contained in this range improves the thermal stability of the resin composition during melt molding and may also inhibits generation of gelatinous hard spots. In addition, the shaped article to be produced may have improved mechanical properties. It is assumed that these effects are derived from generation of chelate interaction between the EVOH (A) and the boron compound.

Examples of the boron compound may include boric acids, borate esters, salts of boric acid, and boron hydrides. Specific examples of the boric acids may include orthoboric acid (H₃BO₃), metaboric acid, and tetraboric acid; specific examples of the borate esters may include trimethyl borate and triethyl borate; specific examples of the salts of boric acids may include alkali metal salts and alkaline earth metal salts of the above boric acids, borax, and the like. Among all, orthoboric acid is preferred.

Examples of the thermoplastic resins other than the EVOH (A) may include various polyolefins (polyethylene, polypropylene, poly 1-butene, poly 4-methyl-1-pentene, ethylene-propylene copolymers, copolymers of ethylene and α-olefin having a carbon number of 4 or more, copolymers of polyolefin and maleic anhydride, ethylene-vinyl ester copolymers, ethylene-acrylic ester copolymers, modified polyolefins obtained by graft modifying them with unsaturated carboxylic acid or a derivative thereof, etc.), various polyamides (nylon 6, nylon 6, 6, nylon 6/66 copolymers, nylon 11, nylon 12, polymetaxylylene adipamide, etc.), various polyesters (polyethylene terephthalate, polybutylene terephthalate, polyethylene naphthalate, etc.), polyvinyl chloride, polyvinylidene chloride, polystyrene, polyacrylonitrile, polyurethane, polycarbonate, polyacetal, polyacrylate, modified polyvinyl alcohol resins, and the like. The thermoplastic resin content in the resin composition is generally less than 30 mass%, preferably less than 20 mass%, and more preferably less than 10 mass%.

### (Shaped Article)

A shaped article comprising the resin composition of the present invention is a preferred embodiment of the present invention. The resin composition may be a shaped article having a monolayer structure or may be a shaped article having a multilayer structure of two or more types together with other various substrates, that is, a multilayer structure. Examples of the molding method include extrusion molding, thermoforming, profile molding, blow molding, rotational molding, and injection molding. The shaped article of the present invention is applied to a wide range of use, preferably films, sheets, containers, bottles, tanks, pipes and hoses.

Specific examples of the molding method for, for example, films, sheets, pipes and hoses may include extrusion molding, for container shapes may include injection molding, and for hollow containers such as bottles and tanks may include blow molding and rotational molding. Such blow molding may include: extrusion blow molding comprising forming a parison by extrusion molding and blowing the parison for molding; and injection blow molding comprising forming a preform by injection molding and blowing the preform for molding. Preferably used methods for flexible packaging materials and containers includes a method comprising extrusion molding a packaging material, such as a multilayer film, and thermoforming an extrusion molded multilayer sheet to form a packaging material in a container shape.

### (Multilayer Structure)

The shaped article is preferably a multilayer structure including a layer of the resin composition of the present invention. The multilayer structure is obtained by laminating a layer of the resin composition of the present invention and another layer. Examples of the layer structure of the multilayer structure may include, where an x layer denotes a layer of a resin other than the resin composition of the present invention, a y layer denotes a layer of the resin composition of the present invention, and a z layer denotes an adhesive resin layer, x/y, x/y/x, x/z/y, x/z/y/z/x, x/y/x/y/x, x/z/y/z/x/z/y/z/x, and the like. When a plurality of x layers, y layers, and z layers are provided, the types of them may be same or different. In addition, a layer using a recovered resin of scrap, such as trimmed portions produced during molding, may be separately provided or a recovered resin may be blended in a layer of such another resin. While a thickness configuration of each layer in the multilayer structure is not particularly limited, a thickness ratio of the y layer to the total layer thickness from the perspective of the moldability and cost is generally from 2% to 20%.

The resin to be used for the x layer is preferably a thermoplastic resin from the perspective of the processability. Examples of the thermoplastic resin may include various polyolefins (polyethylene, polypropylene, poly 1-butene, poly 4-methyl-1-pentene, ethylene-propylene copolymers, copolymers of ethylene and α-olefin having a carbon number of 4 or more, copolymers of polyolefin and maleic anhydride, ethylene-vinyl ester copolymers, ethylene-acrylic ester copolymers, modified polyolefins obtained by graft modifying them with unsaturated carboxylic acid or a derivative thereof), various polyamides (nylon 6, nylon 6, 6, nylon 6/66 copolymers, nylon 11, nylon 12, polymetaxylylene adipamide), various polyesters (polyethylene terephthalate, polybutylene terephthalate, polyethylene naphthalate), polyvinyl chloride, polyvinylidene chloride, polystyrene, polyacrylonitrile, polyurethane, polycarbonate, polyacetal, polyacrylate and modified polyvinal alcohol resins. Such a thermoplastic resin layer may be non-oriented or uniaxially or biaxially oriented or rolled. Among these thermoplastic resins, polyolefins are preferred from the perspective of the moisture resistance, the mechanical properties, the economic efficiency and the heat sealing properties, and polyamides and polyesters are preferred from the perspective of the mechanical properties and the heat resistance.

Meanwhile, the adhesive resin to be used for the z layer is not particularly limited as long as it is capable of adhering each layer, and preferably used adhesive resins include polyurethane-based or polyester-based one- or two-component curable adhesives and carboxylic acid modified polyolefins. The carboxylic acid modified polyolefins include: polyolefin-based copolymers containing unsaturated carboxylic acid or an anhydride thereof (maleic anhydride) as a copolymerization component; and graft copolymers obtained by grafting unsaturated carboxylic acid or an anhydride thereof onto polyolefin.

Examples of the method of producing the multilayer structure of the present invention may include coextrusion molding, coextrusion blow molding, coinjection molding, extrusion lamination, coextrusion lamination, dry lamination, and solution coating, The multilayer structure produced by such a method may be further subjected to reheating within the melting point of the EVOH (A) or lower, followed by secondary processing by a method such as vacuum/compressed air deep drawing, blow molding, and press molding to have an intended shaped article structure. The multilayer structure may be reheated within the melting point of the EVOH (A) or lower and uniaxially or biaxially oriented by a method, such as roll orientation, pantograph orientation, and inflation orientation, to produce an oriented multilayer structure.

### (Method of Producing Resin Composition)

A method of producing the resin composition of the present invention is not particularly limited as long as the method allows production of a resin composition in which the EVOH (A) is produced using an azonitrile polymerization initiator, the amount (NI) of nitrogen elements derived from the polymerization initiator is from 5 to 60 ppm, and the ratio (NF/NI) of the amount (NF) of nitrogen elements contained in a dried solid obtained by the operation (X) below to the amount (NI) of nitrogen elements is from 0.65 to 0.99.

Operation (X): a solution of 5 g of the resin composition dissolved in 100 g of 1,1,1,3,3,3-hexafluoro-2-propanol is dropped in 1000 g of methanol under stirring and a precipitation thus produced is separated and then dried to obtain the dried solid.

A preferred production method comprises the steps of: copolymerizing (I) ethylene and vinyl ester using an azonitrile polymerization initiator to obtain an ethylene-vinyl ester copolymer; saponifying (II) the ethylene-vinyl ester copolymer to obtain the EVOH (A); pelletizing (III) by pelletizing operation to obtain hydrated pellets of the EVOH (A); and drying (IV) the hydrated pellets to obtain a resin composition containing the EVOH (A).

The amount (NI) of nitrogen element derived from the polymerization initiator and the ratio (NF/NI) can be controlled by the following methods: in the copolymerizing step (I), appropriately adjusting the type and amount of use of polymerization initiator, the temperature and time before addition, the polymerization temperature, the polymerization time, the polymerization ratio and the type and amount of use of polymerization solvent; in the saponifying step (II), appropriately adjusting the type and amount of use of alkaline catalyst, the reaction temperature and the reaction time; and in the pelletizing step (III), appropriately adjusting the concentration and temperature of a paste of the EVOH (A) during precipitation of the paste, the composition and temperature of a solidification medium, and the type of a solution, the immersion temperature, the immersion time and the number of immersions for immersion of the hydrated pellets of the EVOH (A) in the following step.

In particular, immersion of the hydrated pellets in an alcohol solvent, such as methanol, allows an increase in the ratio (NF/NI). In this operation, the ratio (NF/NI) may be further effectively increased by employing or appropriately combining methods of increasing the alcohol concentration, raising the immersion temperature, extending the immersion time, increasing the number of immersions, stirring during immersion and ultrasonicating during immersion. In contrast, it is generally difficult to control the ratio (NF/NI) in the range of the present invention only by immersing the hydrated pellets in water.

Examples of the method of containing the respective components, such as the metal ions (B) and the carboxylic acid (C), in the resin composition of the present invention may include a method of mixing and melt kneading the above pellets together with the respective components, a method of mixing the respective components in preparation of the pellets and a method of immersing the pellets in a solution containing the respective components. In this operation, the pellets to be used may be either hydrated pellets or dry pellets.

### (Copolymerizing Step (I))

The copolymerizing step includes, in addition to copolymerizing ethylene and vinyl ester, adding a polymerization inhibitor as needed and subsequently removing unreacted ethylene and unreacted vinyl ester to obtain an ethylene-vinyl ester copolymer solution. Examples of the method of copolymerizing ethylene and vinyl ester may include known methods, such as solution polymerization, suspension polymerization, emulsion polymerization, and bulk polymerization. According to the claimed invention, the vinyl ester used for polymerization is vinyl acetate. The polymerization temperature is preferably from 20°C to 90°C and more preferably from 40°C to 70°C. The polymerization time is generally from 2 to 15 hours. The polymerization ratio is preferably from 10% to 90% relative to the charged vinyl ester and more preferably from 30% to 80%. A resin content in the solution after polymerization is generally from 5 to 85 mass%.

In the copolymerizing step (I), an azonitrile polymerization initiator has to be used. The azonitrile polymerization initiator is capable of controlling the 10-hour half life temperature and the solubility in the solvent by the molecular skeleton. The azonitrile polymerization initiator is less likely to cause induced decomposition due to metallic contact and also less likely to be affected by the solvent during decomposition, thereby allowing safe and stable performance of the process. Examples of the azonitrile polymerization initiator may include 4,4'-azobis(4-cyanovaleric acid), 1,1'-azobis(cyclohexane-1-carbonitrile), 2,2'-azobis(2-methylbutyronitrile), 2,2'-azobis(isobutyronitrile), 2,2'-azobis(2,4-dimethylvaleronitrile), 2,2'-azobis(4-methoxy-2,4-dimethylvaleronitrile), and the like. Among them, 2,2'-azobis(2,4-dimethylvaleronitrile) and 2,2'-azobis(4-methoxy-2,4-dimethylvaleronitrile) are preferably used because they allow immediate proceeding of polymerization at relatively low temperatures.

### (Saponifying Step (II))

Then, an alkaline catalyst is added to the ethylene-vinyl ester copolymer solution to saponify the copolymer in the solution and thus to obtain the EVOH (A). The saponification method may be in a continuous or batch process. Examples of the alkaline catalyst may include sodium hydroxide, potassium hydroxide, and alkali metal alcoholate. After the saponifying step, neutralization of the residual alkaline catalyst is generally performed by adding acid, such as acetic acid.

### (Pelletizing Step (III))

Examples of the pelletizing operation may include: (1) extruding the EVOH (A) solution in a poor solvent at low temperatures for precipitation or solidification and cutting after or immediately after cooling solidification; and (2) contacting the EVOH (A) solution with water vapor to prepare a hydrated EVOH (A) resin composition in advance and cutting the prepared composition. The water content in the hydrated EVOH (A) pellets obtained by such a method is preferably from 50 to 200 parts by mass based on 100 parts by mass of the EVOH (A) and more preferably from 70 to 150 parts by mass. The hydrated pellets thus obtained is generally subjected to washing with a solvent and additive treatment, as needed.

### (Drying Step (IV))

The hydrated EVOH (A) pellets obtained in the pelletizing step are preferably dried to prepare dry EVOH (A) pellets. To prevent molding troubles, such as production of voids during molding, the water content in the dry pellets is preferably 1.0 part by mass or less based on 100 parts by mass of the EVOH (A), more preferably 0.5 part by mass or less, and even more preferably 0.3 part by mass or less. Examples of the method of drying the hydrated pellets may include ventilation drying and fluidized drying. One of the drying methods may be used singly or a plurality of them may be used in combination. The drying may be carried out either in a continuous or batch process, and when a plurality of drying modes are combined, either a continuous or batch process may be freely selected for each drying mode. Drying at a low oxygen concentration or in an oxygen-free condition is preferred from the perspective of reduction in degradation of the resin composition due to oxygen during drying.

The resin composition of the present invention is capable of inhibiting production of voids even during melt molding at high temperatures and thus preferably used for high-speed melt molding process at high temperatures. The resin composition of the present invention is provided economically. The resin composition of the present invention is thus molded into films, sheets, containers, and the like to be preferably used as various packaging materials. A packaging material having a shaped article comprising containing the resin composition of the present invention is a more preferred embodiment of the present invention.

### EXAMPLES

The present invention is specifically described below by way of Examples. Note that the present invention is not limited at all by Examples below. In Examples, measurement, analysis, and evaluation were performed in the following methods.

### (1) Ethylene Unit Content and Degree of Saponification of EVOH (A)

The dry pellets were dissolved in dimethyl sulfoxide (DMSO-d₆) containing tetramethylsilane (TMS) as an internal standard material and trifluoroacetic acid (TFA) as an additive and measured at 80°C using a 500 MHz ¹H-NMR ("GX-500" manufactured by JEOL Ltd.) to obtain the ethylene unit content and the degree of saponification from the peak intensity ratios of the ethylene units, the vinyl alcohol units, and the vinyl ester units.

(2) Amount (NI) of Nitrogen Element derived from Polymerization Initiator Approximately 20 mg of the dry pellets were weighed and the nitrogen element were determined by a trace nitrogen/sulfur analyzer (using "TS-2100H" manufactured by Mitsubishi Chemical Analytech Co., Ltd.) to obtain the amount (NI) of nitrogen element in the dry pellets (resin composition).

(3) Amount (NF) of Nitrogen Element contained in Dried Solid obtained by Operation (X) A solution prepared by dissolving 5 g of the dry pellets in 100 g of 1,1,1,3,3,3-hexafluoro-2-propanol was dropped in 1000 g of methanol (20°C) under stirring and a precipitation thus produced was separated. The precipitation was dried at 100°C for 24 hours to obtain a dried solid, and 20 mg of the dried solid was weighed and the nitrogen element were determined by a trace nitrogen/sulfur analyzer (using "TS-2100H" manufactured by Mitsubishi Chemical Analytech Co., Ltd.) to obtain the amount (NF) of nitrogen element in the dried solid.

### (4) Content of Metal Ions (B)

In a Teflon ^{®} pressure vessel, 0.5 g of the dry pellets were put and then 5 mL of concentrated nitric acid was added for decomposition at room temperature for 30 minutes. After decomposition, the lid was put on and heat was applied at 150°C for 10 minutes and then at 180°C for 5 minutes by a wet decomposition apparatus for further decomposition, followed by cooling to room temperature. The process liquid thus obtained was poured into a 50 mL volumetric flask and diluted with pure water to prepare a solution. The solution was subjected to determination of each metal ion using an ICP emission spectrophotometer. The phosphoric acid compound and the boron compound can be determined similarly.

### (5) Content of Carboxylic Acid (C)

To a 100 mL Erlenmeyer flask with a ground-in stopper, 10 g of the dry pellets and 50 mL of pure water were charged and a cooling condenser was attached for stirring at 95°C for 8 hours. The extract thus obtained was cooled to 20°C, followed by titration with a 0.02 mol/L aqueous sodium hydroxide solution using phenolphthalein as an indicator to determine the carboxylic acid (C).

### (6) Void Evaluation

The dry pellets were subjected to film formation in the conditions below to obtain a monolayer film with a width of 30 cm. A monolayer film obtained 1 hour after starting the film formation was subjected to visual inspection of the state of void production and evaluation against criteria from A to D below to be employed as indices for void evaluation.

### (Film Formation Condition)

Extruder: 20 mm extruder "D2020" manufactured by Toyo Seiki Seisaku-sho, Ltd.
Screw: full flight screw, LID = 20, compression ratio = 2.0
Extrusion temperature: feeding unit/compression unit/weighing unit/die = 180°C/280°C/280°C/280°C
Screw rotation speed: 20 rpm
Take off roll temperature: 80°C
Take off roll speed: adjusted to have a film thickness of 20 µm

### (Evaluation)

A: no voids were observed, or voids were sparsely found in a region within 1 cm from the edge but no voids were observed inside from the region.
B: voids were sparsely found in a region within 2 cm and more than 1 cm from the edge but no voids were found inside from the region.
C: voids were sparsely found in a region within 4 cm and more than 2 cm from the edge but no voids were found inside from the region.
D: voids were found inside from the region of 4 cm from the edge.

### (7) Coloration Resistance

By a thermocompression press apparatus, 10 g of the dry pellets obtained in each Examples and Comparative Examples were heat melted at 220°C for 6 minutes to prepare a sample in a disk shape with a thickness of 3 mm. A plurality of such disk samples were produced to prepare disk samples with a yellow index (YI) of 10, 15, and 20, respectively. The YI was adjusted by changing the drying time at 120°C during production of the dry pellets. The YI of the disk samples was measured using "LabScan XE Sensor" manufactured by HunterLab. The YI value is an index for a degree of yellowness (yellowness) of a target object, and a greater YI value indicates a high degree of yellowness while a smaller YI value indicates a low degree of yellowness and less coloration.

Then, hue of an end face of a 200 m roll of the monolayer film obtained in (6) was compared with the hue of the prepared disk samples to decide the YI range of the roll end face. The YI range was evaluated against criteria from A to C below to be employed as indices for coloration resistance.
A: less than 10
B: 10 or more and less than 15
C: 15 or more

### (8) Interlayer Adhesion

Using the dry pellets, linear low density polyethylene (Novatec LL-UF943 produced by Japan Polyethylene Corp., hereinafter abbreviated as LLDPE), and an adhesive resin (a mixture of 107 parts by mass of Bynel CXA417E produced by DuPont and 93 parts by mass of LLDPE, hereinafter abbreviated as Ad), a 3-material 5-layer multilayer film (LLDPE/Ad/EVOH/Ad/LLDPE = 50 µm/10 µm/10 µm/10 µm/50 µm) was formed. The extruders, the extruding conditions, and the used dies were as follows.

### Extruder:

EVOH: single screw extruder (Labo ME type CO-EXT manufactured by Toyo Seiki Seisaku-sho, Ltd.)
   diameter of 20 mmϕ, LID of 20, full flight screw
   feeding unit/compression unit/weighing unit/die = 175°C/210°C/220°C/220°C
LLDPE: single screw extruder (GT-32-A manufactured by Research Laboratory of Plastics Technology Co., Ltd.)
   diameter of 32 mmϕ, LID of 28, full flight screw
   feeding unit/compression unit/weighing unit/die = 150°C/200°C/210°C/220°C
Ad: single screw extruder (SZW20GT-20MG-STD manufactured by Technovel Corp.)
   diameter of 20 mmϕ, LID of 20, full flight screw
   feeding unit/compression unit/weighing unit/die = 150°C/200°C/220°C/220°C
Die: 300 mm width coat hanger die for 3-material 5-layer film (manufactured by Research Laboratory of Plastics Technology Co., Ltd.)

A multilayer film obtained 15 minutes after starting the film formation was humidity controlled at a temperature of 23°C and relative humidity of 50% RH for 2 hours and then cut into a length of 150 mm and a width of 15 mm in the extrusion direction to obtain a sample. The sample was subjected to peel strength measurement in a T-peel mode at a tensile speed of 250 mm/min. in an atmosphere at 23°C, 50% RH using an autograph DCS-50M tensile tester manufactured by Shimadzu Corp. and evaluated against criteria from A to C below to be employed as indices for interlayer adhesion.
A: 500 g/15 mm or more
B: 300 g/15 mm or more and less than 500 g/15 mm
C: less than 300 g/15 mm

### [Synthesis Example 1]

Using a 250 L pressure reaction vessel, an ethylene-vinyl acetate copolymer was polymerized with raw materials and conditions below.
- Vinyl acetate: 83.0 kg
- Methanol: 26.6 kg
- 2,2'-azobis(4-methoxy-2,4-dimethylvaleronitrile) (2.5 g/L methanol solution) initial feeding amount: 362 mL, continuous feeding amount: 1120 mL/hr
- Polymerization temperature: 60°C
- Polymerization vessel ethylene pressure: 3.6 MPa

When the polymerization ratio of vinyl acetate reached approximately 40%, sorbic acid was added and cooled to terminate the polymerization. The reaction vessel was then opened for deethylenation, followed by feeding the reaction liquid to a purge column. Methanol vapor was introduced from a lower portion of the column and unreacted vinyl acetate was thus removed from the column top to obtain a methanol solution of the ethylene-vinyl acetate copolymer. The solution was charged into a saponification reactor, and a sodium hydroxide/methanol solution (80 g/L) was added to have a molar ratio of sodium hydroxide to the vinyl ester units in the copolymer of 0.7 and methanol was added to adjust the copolymer concentration to be 15%. The temperature of this solution was raised to 60°C for saponification reaction for approximately 4 hours while nitrogen gas was blown in the reactor. The saponification reaction was then terminated by adding acetic acid and water to obtain an EVOH suspension. The suspension was deliquored by a centrifugal deliquoring device and then dried at 60°C for 24 hours to obtain roughly dried EVOH having an ethylene unit content of 32 mol% and a degree of saponification of 99.9 mol%.

### [Synthesis Example 2]

By the same operation as Synthesis Example 1 except for changing the conditions for polymerization of the ethylene-vinyl acetate copolymer as below, roughly dried EVOH was obtained that has an ethylene unit content of 24 mol% and a degree of saponification of 99.9 mol%.
- Vinyl acetate: 102.0 kg
- Methanol: 17.7 kg
- 2,2'-azobis(4-methoxy-2,4-dimethylvaleronitrile) (2.5 g/L methanol solution) initial feeding amount: 280 mL, continuous feeding amount: 850 mL/hr
- Polymerization temperature: 60°C
- Polymerization vessel ethylene pressure: 2.9 MPa

### [Synthesis Example 3]

By the same operation as Synthesis Example 1 except for changing the conditions for polymerization of the ethylene-vinyl acetate copolymer as below, roughly dried EVOH was obtained that has an ethylene unit content of 27 mol% and a degree of saponification of 99.9 mol%.
- Vinyl acetate: 85.2 kg
- Methanol: 32.3 kg
- 2,2'-azobis(4-methoxy-2,4-dimethylvaleronitrile) (2.5 g/L methanol solution) initial feeding amount: 310 mL, continuous feeding amount: 950 mL/hr
- Polymerization temperature: 60°C
- Polymerization vessel ethylene pressure: 2.9 MPa

### [Synthesis Example 4]

By the same operation as Synthesis Example 1 except for changing the conditions for polymerization of the ethylene-vinyl acetate copolymer as below, roughly dried EVOH was obtained that has an ethylene unit content of 44 mol% and a degree of saponification of 99.9 mol%.
- Vinyl acetate: 76.7 kg
- Methanol: 11.0 kg
- 2,2'-azobis(4-methoxy-2,4-dimethylvaleronitrile) (2.5 g/L methanol solution) initial feeding amount: 510 mL, continuous feeding amount: 1570 mL/hr
- Polymerization temperature: 60°C
- Polymerization vessel ethylene pressure: 5.5 MPa

### [Synthesis Example 5]

By the same operation as Synthesis Example 1 except for changing the conditions for polymerization of the ethylene-vinyl acetate copolymer as below, roughly dried EVOH was obtained that has an ethylene unit content of 32 mol% and a degree of saponification of 99.9 mol%.
- Vinyl acetate: 105.0 kg
- Methanol: 38.3 kg
- 2,2'-azobis(4-methoxy-2,4-dimethylvaleronitrile) (10.0 g/L methanol solution) initial feeding amount: 2440 mL, continuous feeding amount: none
- Polymerization temperature: 60°C
- Polymerization vessel ethylene pressure: 3.7 MPa

### [Synthesis Example 6]

By the same operation as Synthesis Example 5 except for changing the concentration of the methanol solution of
2,2'-azobis(4-methoxy-2,4-dimethylvaleronitrile) to 20.0 g/L and using the solution after storing at 51°C for 10 hours, roughly dried EVOH was obtained that has an ethylene unit content of 32 mol% and a degree of saponification of 99.9 mol%.

### [Example 1]

The roughly dried EVOH obtained in Synthesis Example 1 above was put in a mixed solvent of water/methanol = 40/60 (mass ratio) to have a solid content of 40 mass% and was stirred at 60°C for 6 hours to be dissolved. The solution was continuously extruded into a precipitation bath of water/methanol = 90/10 (mass ratio) adjusted at 0°C from a nozzle with a diameter of 4 mm to be precipitated in a strand. The strand was introduced into a pelletizer to obtain porous hydrated pellets. The hydrated pellets were subjected to an operation of immersion in methanol at 50°C for 1 hour while stirring and then washing, the operation being repeated three times. The pellets were then washed using an aqueous acetic acid solution and deionized water, followed by immersion in an aqueous solution containing sodium acetate and acetic acid. The hydrated pellets were separated from the aqueous solution and deliquored, and then put in a hot air drier for drying at 80°C for 3 hours and then at 120°C for 40 hours to obtain dry pellets (resin composition) having a moisture content of 0.1% or less. Using the dry pellets, the above analysis and evaluation were performed. It should be noted that the resin composition was prepared by adjusting the concentration of the respective components in the aqueous solution for immersion to have the content of each component as indicated in Table 1.

### [Example 2]

By the same operation as Example 1 except for performing an operation of immersing in a mixed solvent of water/methanol = 50/50 (mass ratio) at 30°C for 10 minutes without stirring and then washing only once instead of repeating three times the operation of immersion in methanol at 50°C for 1 hour while stirring and then washing, dry pellets were produced for analysis and evaluation.

### [Example 3]

By the same operation as Example 1 except for ultrasonicating during repeating three times of the operation of immersion in methanol at 50°C for 1 hour while stirring and then washing, dry pellets were produced for analysis and evaluation.

### [Example 4]

By the same operation as Example 1 except for using the roughly dried EVOH obtained in Synthesis Example 2 above and using a mixed solvent of water/methanol = 55/45 (mass ratio) as the solvent for dissolution, dry pellets were produced for analysis and evaluation.

### [Example 5]

By the same operation as Example 2 except for using the roughly dried EVOH obtained in Synthesis Example 2 above and using a mixed solvent of water/methanol = 55/45 (mass ratio) as the solvent for dissolution, dry pellets were produced for analysis and evaluation.

### [Example 6]

By the same operation as Example 1 except for using the roughly dried EVOH obtained in Synthesis Example 3 above and using a mixed solvent of water/methanol = 50/50 (mass ratio) as the solvent for dissolution, dry pellets were produced for analysis and evaluation.

### [Example 7]

By the same operation as Example 2 except for using the roughly dried EVOH obtained in Synthesis Example 3 above and using a mixed solvent of water/methanol = 50/50 (mass ratio) as the solvent for dissolution, dry pellets were produced for analysis and evaluation.

### [Example 8]

By the same operation as Example 1 except for using the roughly dried EVOH obtained in Synthesis Example 4 above and using a mixed solvent of water/methanol = 25/75 (mass ratio) as the solvent for dissolution, dry pellets were produced for analysis and evaluation.

### [Example 9]

By the same operation as Example 1 except for using the roughly dried EVOH obtained in Synthesis Example 5 above, dry pellets were produced for analysis and evaluation.

### [Example 10]

By the same operation as Example 2 except for using the roughly dried EVOH obtained in Synthesis Example 5 above, dry pellets were produced for analysis and evaluation.

### [Example 11]

By the same operation as Example 1 except for using the roughly dried EVOH obtained in Synthesis Example 6 above, dry pellets were produced for analysis and evaluation.

### [Examples 12 through 16]

By the same operation as Example 1 except for adjusting the type and concentration of each component in the aqueous solution for immersion to have the content of the component as indicated in Table 1, dry pellets were produced for analysis and evaluation.

### [Comparative Example 1]

By the same operation as Example 1 except for not performing the repeating three times of the operation of immersion in methanol at 50°C for 1 hour while stirring and then washing, dry pellets were produced for analysis and evaluation.

### [Comparative Example 2]

By the same operation as Comparative Example 1 except for using the roughly dried EVOH obtained in Synthesis Example 2 above and using a mixed solvent of water/methanol = 55/45 (mass ratio) as the solvent for dissolution, dry pellets were produced for analysis and evaluation.

### [Comparative Example 3]

By the same operation as Comparative Example 1 except for using the roughly dried EVOH obtained in Synthesis Example 3 above and using a mixed solvent of water/methanol = 50/50 (mass ratio) as the solvent for dissolution, dry pellets were produced for analysis and evaluation.

### [Comparative Example 4]

By the same operation as Example 2 except for using the roughly dried EVOH obtained in Synthesis Example 4 above and using a mixed solvent of water/methanol = 25/75 (mass ratio) as the solvent for dissolution, dry pellets were produced for analysis and evaluation.

### [Comparative Example 5]

By the same operation as Comparative Example 1 except for using the roughly dried EVOH obtained in Synthesis Example 4 above and using a mixed solvent of water/methanol = 25/75 (mass ratio) as the solvent for dissolution, dry pellets were produced for analysis and evaluation.

### [Comparative Example 6]

By the same operation as Comparative Example 1 except for using the roughly dried EVOH obtained in Synthesis Example 5 above, dry pellets were produced for analysis and evaluation.

### [Comparative Example 7]

By the same operation as Example 2 except for using the roughly dried EVOH obtained in Synthesis Example 6 above, dry pellets were produced for analysis and evaluation.

### [Comparative Example 8]

By the same operation as Comparative Example 1 except for using the roughly dried EVOH obtained in Synthesis Example 6 above, dry pellets were produced for analysis and evaluation.

**[Table 1]**

| | Synthesis Example | Ethylene Unit Content | Amount of Nitrogen Elements (NI) | Amount of Nitrogen Elements After Operation (X) (NF) | Ratio (NF/NI) | Metal Ion (B) | | Carboxylic Acid Compound (C) | | Void Evaluation | Coloration Resistance | Interlayer Adhesion |
|---|---|---|---|---|---|---|---|---|---|---|---|---|
| | | mol% | ppm | ppm | - | Type | ppm | Type | ppm | - | - | - |
| Example 1 | 1 | 32 | 36 | 32 | 0.89 | Na | 181 | Acetic Acid | 308 | A | B | B |
| Example 2 | 1 | 32 | 45 | 33 | 0.73 | Na | 180 | Acetic Acid | 308 | B | B | B |
| Example 3 | 1 | 32 | 32 | 31 | 0.97 | Na | 180 | Acetic Acid | 310 | A' | B | B |
| Example 4 | 2 | 24 | 15 | 13 | 0.87 | Na | 179 | Acetic Acid | 306 | A | C | B |
| Example 5 | 2 | 24 | 19 | 13 | 0.68 | Na | 181 | Acetic Acid | 310 | B | C | B |
| Example 6 | 3 | 27 | 25 | 21 | 0.84 | Na | 182 | Acetic Acid | 309 | A | B | B |
| Example 7 | 3 | 27 | 31 | 22 | 0.71 | Na | 180 | Acetic Acid | 311 | B | B | B |
| Example 8 | 4 | 44 | 57 | 51 | 0.89 | Na | 177 | Acetic Acid | 309 | A | A | B |
| Example 9 | 5 | 32 | 38 | 35 | 0.92 | Na | 180 | Acetic Acid | 300 | A | B | B |
| Example 10 | 5 | 32 | 48 | 35 | 0.73 | Na | 183 | Acetic Acid | 310 | B | B | B |
| Example 11 | 6 | 32 | 46 | 37 | 0.80 | Na | 180 | Acetic Acid | 300 | A | B | B |
| Example 12 | 1 | 32 | 36 | 31 | 0.86 | Na | 60 | Acetic Acid | 310 | A | A | C |
| Example 13 | 1 | 32 | 37 | 32 | 0.86 | Na | 447 | Acetic Acid | 309 | B | C | A |
| Example 14 | 1 | 32 | 37 | 31 | 0.84 | K | 300 | Acetic Acid | 307 | A | B | A |
| Example 15 | 1 | 32 | 36 | 33 | 0.92 | Na | 181 | Acetic Acid | 40 | B | C | A |
| Example 16 | 1 | 32 | 35 | 32 | 0.91 | Na | 178 | Acetic Acid | 451 | B | A | C |
| Comparative Example 1 | 1 | 32 | 55 | 34 | 0.62 | Na | 180 | Acetic Acid | 308 | C | B | B |
| Comparative Example 2 | 2 | 24 | 22 | 13 | 0.59 | Na | 179 | Acetic Acid | 306 | C | C | B |
| Comparative Example 3 | 3 | 27 | 35 | 21 | 0.60 | Na | 182 | Acetic Acid | 309 | C | B | B |
| Comparative Example 4 | 4 | 44 | 64 | 52 | 0.81 | Na | 178 | Acetic Acid | 309 | C | A | B |
| Comparative Example 5 | 4 | 44 | 75 | 53 | 0.71 | Na | 177 | Acetic Acid | 309 | C | A | B |
| Comparative Example 6 | 5 | 32 | 57 | 36 | 0.63 | Na | 183 | Acetic Acid | 310 | C | B | B |
| Comparative Example 7 | 6 | 32 | 71 | 37 | 0.52 | Na | 180 | Acetic Acid | 300 | D | C | B |
| Comparative Example 8 | 6 | 32 | 98 | 37 | 0.38 | Na | 180 | Acetic Acid | 308 | D | C | B |

| | | | | | | | | | | | | |
|---|---|---|---|---|---|---|---|---|---|---|---|---|
| * Moderate Increase in Resin Pressure was Observed during Film Formation | | | | | | | | | | | | |

## Claims

1. A resin composition comprising an ethylene-vinyl alcohol copolymer (A) as a main component, the copolymer (A) being produced using an azonitrile polymerization initiator, wherein
the ethylene-vinyl alcohol copolymer (A) has an ethylene unit content from 20 to 60 mol% and a degree of saponification of 85 mol% or more,
the ethylene-vinyl alcohol copolymer (A) consists of copolymerized units of ethylene, vinyl acetate and vinyl alcohol,
an amount (NI) of nitrogen elements derived from the polymerization initiator is from 5 to 60 ppm, and
a ratio (NF/NI) of an amount (NF) of nitrogen elements contained in a dried solid obtained by an operation (X) below to the amount (NI) of nitrogen elements is from 0.65 to 0.99.
Operation (X): a solution of 5 g of the resin composition dissolved in 100 g of 1,1,1,3,3,3-hexafluoro-2-propanol is dropped in 1000 g of methanol under stirring and a precipitation thus produced is separated and then dried to obtain the dried solid,
wherein the amount (NI) of nitrogen elements and the amount (NF) of nitrogen elements are determined according to the method disclosed in the experimental part of the specification.

2. The resin composition according to Claim 1, wherein the ratio (NF/NI) is from 0.75 to 0.95, wherein the amount (NI) of nitrogen elements and the amount (NF) of nitrogen elements are determined according to the method disclosed in the experimental part of the specification.

3. The resin composition according to Claim 1 or 2, further comprising 100 to 400 ppm of metal ions (B), wherein the content of metal ions (B) is determined according to the method disclosed in the experimental part of the specification.

4. The resin composition according to any one of Claims 1 through 3, further comprising 50 to 400 ppm of carboxylic acid (C), wherein the content of carboxylic acid (C) is determined according to the method disclosed in the experimental part of the specification.

5. A shaped article comprising the resin composition according to any one of Claims 1 through 4.

6. The shaped article according to Claim 5, wherein the shaped article is a multilayer structure.

7. A packaging material comprising the shaped article according to Claim 5 or 6.

## Patentansprüche

1. Harzzusammensetzung, umfassend ein Ethylen-Vinylalkohol-Copolymer (A) als eine Hauptkomponente, wobei das Copolymer (A) unter Verwendung eines Azonitril-Polymerisationsinitiators hergestellt wird, wobei
das Ethylen-Vinylalkohol-Copolymer (A) einen Gehalt an Ethyleneinheiten von 20 bis 60 Mol-% und einen Verseifungsgrad von 85 Mol-% oder mehr aufweist,
das Ethylen-Vinylalkohol-Copolymer (A) aus copolymerisierten Einheiten von Ethylen, Vinylacetat und Vinylalkohol besteht,
eine Menge (NI) an Stickstoffelementen, die von dem Polymerisationsinitiator stammen, von 5 bis 60 ppm beträgt, und
das Verhältnis (NF/NI) zwischen der Menge (NF) an Stickstoffelementen, die in einem getrockneten Feststoff enthalten sind, der durch die nachstehende Operation (X) erhalten wurde, und der Menge (NI) an Stickstoffelementen 0,65 bis 0,99 beträgt.
Operation (X): Eine Lösung von 5 g der Harzzusammensetzung, die in 100 g 1,1,1,3,3,3-Hexafluor-2-propanol gelöst ist, wird unter Rühren in 1000 g Methanol getropft und der so entstandene Niederschlag wird abgetrennt und anschließend getrocknet, um den getrockneten Feststoff zu erhalten,
wobei die Menge (NI) an Stickstoffelementen und die Menge (NF) an Stickstoffelementen nach dem im experimentellen Teil der Beschreibung offengelegten Verfahren bestimmt werden.

2. Harzzusammensetzung nach Anspruch 1, wobei das Verhältnis (NF/NI) von 0,75 bis 0,95 beträgt, wobei die Menge (NI) an Stickstoffelementen und die Menge (NF) an Stickstoffelementen nach dem im experimentellen Teil der Beschreibung offengelegten Verfahren bestimmt werden.

3. Harzzusammensetzung nach Anspruch 1 oder 2, weiter umfassend 100 bis 400 ppm Metallionen (B), wobei der Gehalt an Metallionen (B) nach dem im experimentellen Teil der Beschreibung offengelegten Verfahren bestimmt wird.

4. Harzzusammensetzung nach einem der Ansprüche 1 bis 3, weiter umfassend 50 bis 400 ppm Carbonsäure (C), wobei der Gehalt an Carbonsäure (C) nach dem im experimentellen Teil der Beschreibung offenbarten Verfahren bestimmt wird.

5. Geformter Gegenstand, umfassend die Harzzusammensetzung nach einem der Ansprüche 1 bis 4.

6. Geformter Gegenstand nach Anspruch 5, wobei der geformte Gegenstand eine Mehrschichtstruktur ist.

7. Verpackungsmaterial, umfassend den geformten Gegenstand nach Anspruch 5 oder 6.

## Revendications

1. Composition de résine comprenant un copolymère d'éthylène-alcool vinylique (A) en tant que composant principal, le copolymère (A) étant produit en utilisant un initiateur de polymérisation d'azonitrile, dans laquelle
le copolymère d'éthylène-alcool vinylique (A) a une teneur en unités d'éthylène de 20 à 60 % en mole et un degré de saponification de 85 % en mole ou plus,
le copolymère d'éthylène-alcool vinylique (A) est constitué d'unités copolymérisées d'éthylène, d'acétate de vinyle et d'alcool vinylique,
une quantité (NI) d'éléments d'azote dérivés de l'initiateur de polymérisation va de 5 à 60 ppm, et
un rapport (NF/NI) d'une quantité (NF) d'éléments d'azote contenus dans un solide séché obtenu par une opération (X) en dessous de la quantité (NI) d'éléments d'azote va de 0,65 à 0,99.
Opération (X) : une solution de 5 g de la composition de résine dissoute dans 100 g de 1,1,1,3,3,3-hexafluoro-2-propanol est versée dans 1000 g de méthanol sous agitation et une précipitation ainsi produite est séparée, puis séchée pour obtenir le solide séché,
dans laquelle la quantité (NI) d'éléments d'azote et la quantité (NF) d'éléments d'azote sont déterminées conformément au procédé divulgué dans la partie expérimentale de la spécification.

2. Composition de résine selon la revendication 1, dans laquelle le rapport (NF/NI) va de 0,75 à 0,95, dans laquelle la quantité (NI) d'éléments d'azote et la quantité (NF) d'éléments d'azote sont déterminées conformément au procédé divulgué dans la partie expérimentale de la spécification.

3. Composition de résine selon la revendication 1 ou 2, comprenant en outre 100 à 400 ppm d'ions métalliques (B), dans laquelle la teneur en ions métalliques (B) est déterminée conformément au procédé divulgué dans la partie expérimentale de la spécification.

4. Composition de résine selon l'une quelconque des revendications 1 à 3, comprenant en outre 50 à 400 ppm d'acide carboxylique (C), dans laquelle la teneur en acide carboxylique (C) est déterminée conformément au procédé divulgué dans la partie expérimentale de la spécification.

5. Article mis en forme comprenant la composition de résine selon l'une quelconque des revendications 1 à 4.

6. Article mis en forme selon la revendication 5, dans lequel l'article mis en forme est une structure multicouche.

7. Matériau d'emballage comprenant l'article mis en forme selon la revendication 5 ou 6.
